# EUROPEAN PATENT APPLICATION

(11) **EP 4 461 714 A1**
(43) Date of publication of application: **13.11.2024**
(21) Application number: 23425019.9
(22) Date of filing: 08.05.2023
(51) Int. Cl.: C04B 41/48, C04B 41/00, C04B 41/50, C04B 41/86, C04B 33/34, C09D 11/38, C04B 111/00

(54) **COMPOSITION CURABLE BY ULTRAVIOLET RADIATION FOR DIGITAL RELIEF PRINTING**

(71) Applicant: Inkgenio S.r.l., 41042 Fiorano Modenese (MO) (IT)
(72) Inventor: PALUMBO, Vincenzo, 41042 Fiorano Modenese (MO) (IT); MARASTONI, Mirko, 41042 Fiorano Modenese (MO) (IT)
(74) Representative: Botti & Ferrari S.p.A.

(57) **Abstract**

A composition curable by ultraviolet radiation for digital relief printing comprising an inorganic component comprising at least one element selected from clay, a silica mineral, a silicate, a frit, or any mixture thereof, an organic component comprising at least one photoinitiator and at least one selected from acrylate monomer, acrylate polymer, methacrylate monomer, methacrylate polymer or any combination thereof, a solvent and a dispersing agent, an application process thereof to a ceramic substrate, as well as a thus realized decorated ceramic manufactured article.

## Description

### Application field

The present invention relates to the ceramic industry field. In particular, it relates to a composition curable by ultraviolet radiation for digital relief printing for ceramic substrates.

Also, the present invention relates to a process for the application of a composition curable by ultraviolet radiation for digital relief printing on ceramic substrates.

Further, the present invention relates to a thereby realized decorated ceramic manufactured article.

Moreover, the present invention relates to a plant for the deposition of the aforesaid composition curable by ultraviolet radiation for digital relief printing.

### Background art

It is known that ceramic substrates, in particular tiles, are obtained through the sintering of ceramic clays, feldspars, kaolin, and quartz. Such components are grinded, transformed in slip, appearing as a viscous mix, finally atomized up to pulverization, ready for the shaping step.

In particular, such components are mixed in different amounts and proportions, to which chemical additives and water are added, thus obtaining a mixture. Later on, such mixture is fed to a shaping step to obtain the ceramic substrate, which is finally dried and cooked at a very high temperature, *i.e.,* between 900°C and 1250°C, according to which type of ceramic product has to be obtained, for example bricks or porcelain stoneware.

Traditionally, the possible tile shaping methodologies are two:
- pressing, wherein the slip is subjected to atomization up to pulverization, then the thus obtained powdered raw materials are compacted by means of high-pressure presses, thereby creating tiles in single-fired and double-fired porcelain stoneware.
- extrusion, wherein the slip, after being subjected to a wet grinding process, is forced by compression to pass through a die mouth, *i.e.,* an orifice; within the extrusion chamber the mix mass is compacted and the emerging semi-finished product is cut according to the desired shape and size.

In particular, during the pressing, powders are directed in presses able to exert a force equal to 10,000 tons, giving the specific shape and desired size to obtain the final ceramic tile. The thus formed and pressed tile can be smooth or structured.

Recently, the commercial demand focuses more and more on the production of structured tiles, presenting the upper surface in relief, so to recreate parquet-like effects, wood grain, stone cavities, such as travertine, or other types of decoration, besides that such relieves give the product less slipperiness than smooth tiles.

To obtain such relieves on ceramic substrates, the ceramic presses are endowed with decorative means, being pads for traditional presses or belts for pressing large formats. Generally, such pads and belts are rubbers or special resins engraving, by pressing, the ceramic substrate surface thus forming the relief decorations.

The esthetic and technical drawback of this traditional process is, besides the cost in terms of time and required operations for each incision, the limitation of the patterns which can be combined in the tile decorative step, for which it is required the use of pads and belts bearing patterns and relieves different from those of pads and belts under use, and the wear over time of such decorative means.

In fact, each decorative mean shows only one type of décor and different decors can be difficultly recreated on the same pads or belts. The possibility to change the décor on the tile implies the change of the pad or belt, which are not particularly easy to handle, and this would imply an increase in production times.

It is known that decorative means such as belts used for large formats cannot last beyond 100,000 square meters of production, *i.e.,* about two or three production weeks, and have very high costs greatly exceeding 50,000 euros per unit.

The technical problem underlying the present invention is therefore providing a technology for the relief decoration of ceramic substrates allowing to overcome the previously described issues, in particular generating a simplification of the relief decoration steps of the ceramic substrates and allowing a wide range of different decorations, solving the issues of the traditional techniques, obtaining a ceramic support engraved with a decorative pattern, which is in relief and durable over time.

### Summary of the Invention

This problem has been solved by providing a composition curable by ultraviolet (U.V.) radiation for digital relief printing comprising:
- an inorganic component comprising at least one element selected from clay, a silica mineral, a silicate, a frit or any mixture thereof;
- an organic component comprising at least one photoinitiator and at least one selected from acrylate monomer, acrylate polymer, methacrylate monomer or methacrylate polymer or any combination thereof;
- a solvent; and
- a dispersing agent.

In particular, according to the present invention, the solvent is selected from water, glycerol, at least one alkyl ether or any combination thereof.

More preferably, the solvent is at least one alkyl ether, even more preferably a glycol ether.

Most preferably, when the solvent is at least one glycol ether, the latter may be selected from dipropylene glycol monomethyl ether, dipropylene glycol n-butyl ether, 2-ethoxyethanol, 2-methoxyethanol or mixtures thereof.

Alternatively, the solvent is selected from water, glycerol or any mixture thereof.

More preferably, the solvent is a mixture of glycerol and water.

Preferably, such inorganic component comprises a mixture of clay, at least one silica mineral, at least one silicate and a frit.

The term "clay" means a mineral substance which, when mixed with water, involves the formation of a formable mass suitable for maintaining shape and cohesion after drying. According to the clay mineral present and its percentage, the clay properties and, therefore, their uses vary. In particular, clays belonging to illite group, referred to as common clays or brick clays, generally have high plasticity, but not very high melting temperature, therefore, they are preferred for use in ceramic industry and, hence, in the present invention.

Preferably, in said inorganic component that at least one silica mineral is selected from quartz, a quartz polymorph mineral, opal, or any combination thereof.

Preferably, in said inorganic component such at least one silicate is selected from feldspars, kaolin, phyllosilicates, in particular talc, borosilicates, or any combination thereof.

The term "frit" means a glass mixture, obtained by melting silica and/or alkaline oxides and sometimes boric anhydride, and which, after grinding, is applied on the ceramic substrate.

Preferably, such frit comprises an element selected from silica and/or a solvate thereof, a silica mineral, a silicate, a metal oxide, a metal oxide-based mineral, a non-metal oxide, a metal silicide, or any combination thereof.

Preferably, such frit comprises silica or a solvate thereof, more preferably silica and/or a hydrate thereof.

More preferably, such frit comprises at least one metal oxide, said at least one metal oxide being selected from lithium oxide, sodium oxide, magnesium oxide, potassium oxide, calcium oxide, strontium oxide, barium oxide, zinc oxide, lead oxide, aluminum oxide, titanium oxide, zirconium oxide and/or any combination thereof.

Preferably, in said frit the silica mineral is selected from quartz, a quartz polymorph mineral, opal, or any combination thereof.

Preferably, in said frit the silicates are selected from feldspars, kaolin, phyllosilicates, in particular talc, borosilicates or any combination thereof.

Preferably, the frit comprises additionally any one from sodium tetraborate and/or hydrates thereof, a carbonate or a combination thereof.

More preferably, the carbonate is an alkaline metal carbonate, an alkaline earth metal carbonate or a combination thereof, even more preferably said carbonate is selected from calcium carbonate, barium carbonate, potassium carbonate or any combination thereof.

Preferably, said acrylate monomer, said acrylate polymer, said methacrylate monomer, said methacrylate polymer can be selected from an alkyl acrylate, an alkyl methacrylate, a diol diacrylate, a diol dimethacrylate, a polyol diacrylate, a polyol dimethacrylate, a polyol triacrylate, a polyol trimethacrylate, a polyurethan acrylate, a glycolic monomer acrylate or any combination thereof.

More preferably, said at least one alkyl acrylate can be selected from octyl decyl acrylate, tetrahydrofurfuryl acrylate, isobornyl acrylate, ethyl acrylate, n-propyl acrylate, isopropyl acrylate, or any combination thereof.

According to an alternative embodiment, said at least one alkyl acrylate can comprise an ethoxylated and/or propoxylated alkyl chain.

More preferably, said polyol triacrylate can be selected from glycerolpropoxy triacrylate, trimethylolpropane ethoxylated triacrylate, trimethylolpropane triacrylate or any combination thereof.

More preferably, said glycolic monomer acrylate can be selected from tri(propylen glycol) diacrylate (TPGDA), dipropylenglycol diacrylate (DPGDA), tri(ethylen glycol) dimethacrylate or any mixture thereof.

According to a preferred embodiment thereof, the composition curable by ultraviolet radiation according to the invention can further comprise at least one acrylate oligomer.

In particular, such at least one acrylate oligomer is selected from polyester acrylate, epoxy acrylate, urethane acrylate, acryl-acrylate, vinyl-acrylate, polyether acrylate or any combination thereof.

In particular, the at least one acrylate oligomer above can be a mono- or poly-functional oligomer.

For example, the at least one acrylate oligomer can be an amino-modified polyester.

In particular, in the composition according to the invention such acrylate oligomer can contain aliphatic and/or aromatic carbon chains.

Preferably, in the composition according to the invention said photoinitiator can be a Norrish I type photoinitiator or a Norrish II type photoinitiator.

Advantageously, photoinitiators allow the crosslinking of the composition curable by ultraviolet radiation for digital relief printing due to ionic or radical processes, started from photoinitiators able to absorb the ultraviolet radiation of the ultraviolet-visible spectrum, for example U.V.-A, U.V.-B and U.V.-C.

Preferably, in the composition according to the invention, said photoinitiator is selected from phosphines, phosphine oxide, thioxanthones, ketocoumarines, alpha-hydroxy-ketones, benzyldimethylketal, benzophenones, amino-ketones, ketosulphones, glyoxylates or any combination thereof.

In particular, photoinitiators have different nature according to the type of used U.V. lamp.

Photoinitiators, predominantly used for applications with LED lamps at 365 nm, 385-395 nm, belong to the chemical family of acyl phosphines, phosphine oxide, thioxanthones and ketocoumarines.

For crosslinking obtained by Hg lamps, alpha-hydroxy-ketones, benzyldimethylketal, benzophenones, amino-ketones, ketosulphones, glyoxylates, phosphine oxide, thioxanthones and/or ketocoumarines photoinitiators can be used.

Preferably, the photoinitiator is a phosphine oxide, a phosphine, or a combination thereof, even more preferably is an acyl phosphine.

Most preferably, the photoinitiator is phenylbis (2,4,6-trimethylbenzoyl) phosphine oxide or diphenyl (2,4,6-trimethylbenzoyl) phosphine oxide or any combination thereof.

Alternatively, such photoinitiator is a compound belonging to the thioxanthone family.

More preferably, the photoinitiator is selected from 2,4-diethylthioxanthone, 4-isopropyl-thioxanthone, 2-isopropyl-thioxanthone or any combination thereof.

Most preferably, the photoinitiator is 2,4-diethylthioxanthone or 2-isopropyl-thioxanthone.

Alternatively, the photoinitiator is a compound belonging to the ketocoumarine family.

Preferably, said dispersing agent is a polymer or copolymer with functional groups with affinity to inorganic components, more preferably said functional groups are carboxy groups, amine groups, sulphonic groups, phosphonate groups, or it is an ammonium salt.

Even more preferably, said dispersing agent is a block polymer or copolymer of the aforesaid type.

Equally preferred, said dispersing agent is a polymer or copolymer with carboxy groups, preferably said polymer or copolymer being based on polyacrylic acid or methacrylic acid.

Preferably, said dispersing agent is comprised between 1-20% by weight on the total weight of composition curable by ultraviolet radiation for digital relief printing.

Preferably, such composition curable by ultraviolet radiation for digital relief printing can further comprise at least one functional additive selected from antifoam agents, antibacterial agents and/or viscosity depressant agents.

More preferably, said antifoam agents can be polyamides, optionally in combination with highly branched polymers, such as silicone compounds or acetylenic diols.

According to a preferred embodiment of the invention, the inorganic component can further comprise at least one inorganic pigment.

Preferably, the inorganic component can be present in an amount comprised between 25%-70%, more preferably between 30-60%, by weight on the total weight of the composition curable by ultraviolet radiation for digital relief printing.

Preferably, the organic component can be present in an amount comprised between 0.1-15%, more preferably between 1-10%, by weight on the total weight of the composition curable by ultraviolet radiation for digital relief printing.

Preferably, the solvent can be present in an amount comprised between 15-75%, more preferably between 20-65%, by weight on the total weight of the composition curable by ultraviolet radiation for digital relief printing.

Preferably, the aforesaid functional additive can be present in an amount comprised between 0-10% by weight on the total weight of the composition curable by ultraviolet radiation for digital relief printing.

According to a preferred embodiment, the composition curable by ultraviolet radiation for digital relief printing of the invention may consist of the following components, shown as percentage by weight based on the total weight of the composition:

| | |
|---|---|
| organic component | 0.1-15 |
| inorganic component | 25-70 |
| solvent | 15-75 |
| dispersing agent | 1-20 |
| functional additive | 0-10 |

Preferably, the composition curable by ultraviolet radiation for digital relief printing has a viscosity comprised between 5cP-50cP, measured at a temperature comprised between 20°C and 60°C.

The viscosity was measured according to the following procedure:
- a sample of the composition curable by ultraviolet radiation for digital relief printing is placed in a Kinexus rheometer equipped with a flat cone impeller;
- the impeller is driven at speed of 20 rpm and kept at such speed steadily for 5 minutes;
- the detected dynamic viscosity value is recorded.

Preferably, the composition curable by ultraviolet radiation for digital relief printing has a dynamic surface tension value comprised between 20-40 mN/m.

In particular, such dynamic surface tension value is measured by a Sita proline t15 (SITA) Tensiometer at a temperature set at 25°C and a pressure of 1 atm.

Preferably, the composition curable by ultraviolet radiation for digital relief printing has a conductivity value comprised between 0-3000 µS.

In particular, such conductivity value is measured with a Model COND 51 conductometer (XS Instruments).

Advantageously, the chemical-physical parameters of such composition curable by ultraviolet radiation for digital relief printing are suitable to deposit such composition by a digital printer, in a manner compatible with the characteristics of the nozzles.

More advantageously, the surface tension and the viscosity of such composition curable by ultraviolet radiation for digital relief printing allow nozzles not to be obstructed and to obtain a perfect décor printing.

Preferably, the composition curable by ultraviolet radiation for digital relief printing has a pH value comprised between 3-9.

In particular, such pH value is measured by a model 8 Series pH-meter (XS Instruments) and at a temperature of 25°C.

Preferably, in the composition curable by ultraviolet radiation for digital relief printing the inorganic component has an average particle size lower than 5 microns, preferably comprised between 0.1 and 4 microns, more preferably between 0.1 and 3 micron, measured with a Mastersizer 3000 Malvern laser granulometer.

In particular, the Mastersizer 3000 Malvern laser granulometer can be equipped with a Hydro 500 ml sampler.

Advantageously, the composition curable by ultraviolet radiation for digital relief printing of the invention can be applied directly on the ceramic substrate surface, ensuring suitable adhesion features, obtaining - prior cross-linking, pressing, and backing, as can be seen in the following with reference to the process according to the present invention - a ceramic substrate covered by a decorative pattern in relief which is durable over time.

In particular, the composition curable by ultraviolet radiation for digital relief printing of the invention is particularly stable and has an optimal adhesion to the ceramic substrate to which it is intended to be applied.

The aforesaid technical problem is solved also by a process for applying a composition curable by ultraviolet radiation for digital relief printing according to the invention on ceramic substrates comprising the steps of:
a) providing a ceramic substrate;
b) providing the aforesaid composition curable by ultraviolet (U.V.) radiation for digital relief printing comprising an inorganic component comprising at least one element selected from clay, a silica mineral, a silicate, a frit, or any mixture thereof; an organic component comprising at least one photoinitiator and at least one selected from acrylate monomer, acrylate polymer, methacrylate monomer, methacrylate polymer or any combination thereof; a solvent; and a dispersing agent;
c) applying the aforesaid composition curable by ultraviolet radiation for digital relief printing on the ceramic substrate by digital printing;
d) fixing said composition curable by ultraviolet radiation for digital relief printing on the aforesaid ceramic substrate by curing with ultraviolet radiation, obtaining a ceramic substrate having a decorative pattern in relief;
e) firing the thus decorated ceramic substrate at a temperature comprised between 900°C-1200°C until obtaining a fired ceramic substrate having a decorative pattern in relief, wherein the decorative pattern in relief is monolithic with the fired ceramic substrate;
f) cooling or allowing to cool the aforesaid fired ceramic substrate having a decorative pattern in relief.

In other words, as explained below in connection with the detailed Description and Examples, the process according to the present invention allows to obtain a fired ceramic substrate having a decorative pattern in relief, deriving from the composition curable by ultraviolet radiation for digital relief printing, wherein the decorative pattern in relief is monolithic with the fired ceramic substrate, by a limited number of steps and a single firing step.

Preferably, in the composition curable by ultraviolet radiation for digital relief printing provided during aforesaid step b) the average particle size is lower than 5 microns, more preferably comprised between 0.1 and 4 microns, even more preferably between 0.1 and 3 microns, measured with a Mastersizer 3000 Malvern laser granulometer.

In particular, the Mastersizer 3000 Malvern laser granulometer can be equipped with a Hydro 500 ml sampler.

Preferably, step b) of providing a composition curable by ultraviolet radiation for digital relief printing comprises the following steps:
- mixing the inorganic component by stirring with the dispersing agent and the solvent, obtaining a dispersion;
- grinding such dispersion until obtaining an average particle size lower than 5 microns, preferably between 0,1 and 4 microns, more preferably between 0.1 and 3 microns, measured with a Mastersizer 3000 Malvern laser granulometer;
- mixing the aforesaid thus grinded dispersion with the organic component;
- optionally, filtering the previously obtained dispersion by a filter with pores of size equal to or lower than 5 microns so to obtain the aforesaid composition curable by ultraviolet radiation for digital relief printing.

Advantageously, the grinding step and the subsequent optional filtration step allow to obtain a composition curable by ultraviolet radiation having a particle size suitable for the subsequent decoration steps, beside to avoid obstructions in the instruments used during the process.

In particular, the grinding step and the subsequent optional filtration step allow to obtain an average particle size particularly suitable for the application of the composition curable by ultraviolet radiation for digital relief printing by suitable nozzles comprised in digital printing devices.

Preferably, during step c) of application an amount of the aforesaid composition curable by ultraviolet radiation for digital relief printing comprised between 50-500 g/m2 is applied.

Preferably, during step c) of application the composition curable by ultraviolet radiation for digital relief printing has a viscosity comprised between 5cP-50cP, measured at a temperature comprised between 20 °C and 60 °C.

More preferably, during step c) of application the composition curable by ultraviolet radiation for digital relief printing has a temperature in the printing head comprised between 20°C and 60°C.

Preferably, step c) of application of the composition curable by ultraviolet radiation for digital relief printing is carried out with a single-pass or multi-pass digital printer.

More preferably, when the digital printer is a single-pass printer the decorative pattern is applied by the deposition of at least one layer having a maximum height of 2 mm, preferably comprised between 0.3 mm and 1.5 mm.

Advantageously, the regulation of the viscosity parameters, modulated on the characteristics of the printing heads, allows to overcome any nozzle obstruction during the dispensing of the composition curable by ultraviolet radiation for digital relief printing. Specifically, the viscosity comprised in the above defined range allows to properly facilitate the operation of the ink in the printing head and the drop formation during step c) of application and to avoid any printing defects.

Preferably, during step d) of fixing a ceramic substrate having an at least partially cross-linked decorative pattern in relief is obtained.

More preferably, during step d) of fixing a ceramic substrate having a partially cross-linked decorative pattern in relief is obtained.

Preferably, during step d) of fixing the curing or crosslinking is performed by the use of a U.V., LED, or Hg lamp.

Preferably, during step d) of fixing the curing is partial.

Optionally, during step d) of fixing the curing can be total.

Preferably, step d) of fixing is performed at a process speed ranging from 10 m/min to 60 m/min.

Preferably, during said step d) of fixing the ultraviolet radiation has a wavelength comprised generally between 150 nm and 420 nm.

In particular, step d) of fixing can be performed by means of a LED lamp or a mercury vapor lamp.

More preferably, said step d) of fixing can be performed by means of a LED lamp concentrating the power peak at a specific wavelength, comprised between 278 nm and 405 nm, more preferably between 385 nm and 405 nm.

Specifically, said LED lamp can have a power up to 36 Watt and can be at single or multiple windows.

Alternatively, said step d) of fixing can be performed by a mercury vapor lamp concentrating the power peak at a specific wavelength, comprised between 150 nm and 420 nm.

Specifically, said mercury lamp can be a medium pressure mercury lamp and has a power up to 240 Watt.

Preferably, the aforesaid process can comprise a further decoration step, wherein ink is applied on the ceramic substrate having a decorative pattern in relief so to define a further decorative pattern, more preferably such ink is a ceramic ink for decoration.

Preferably, during step e) the firing takes place for a time comprised between 45-65 minutes.

Advantageously, during step e) of firing, the organic component of the composition curable by ultraviolet radiation for digital relief printing decomposes due to the temperatures set during such step, thus making the total curing unnecessary during step d) of fixing. The partial solidification allows to fix the composition curable by ultraviolet radiation for digital relief printing, speeding up the process as a whole.

Advantageously, during step e) of firing, the organic component of the composition according to the invention decomposes and the inorganic component vitrifies, forming a monolith together with the ceramic substrate, obtaining a ceramic substrate having a decorative pattern in relief.

Advantageously, such method gives the surface a tridimensional effect which can vary according to the preferred decoration, and can be combined with the traditional decoration means such as a smooth pad, creating even more different tridimensional effects, obtaining more and more customizable ceramic substrates.

Even more advantageously, the tridimensional effect obtained by such method give the ceramic substrate different tactile and visual aspects more similar to the décor to be reproduced. For example, such method allows to obtain reliefs resembling wood grain.

Advantageously, such process allows to reduce the costs on the productive compartment, avoiding or reducing expensive traditional decorative means such as pads or belts.

Even more advantageously, the process of the invention allows to obtain a ceramic substrate covered by a decorative pattern in relief durable over time, simplifying the process steps of application of compositions curable by ultraviolet radiation for digital printing in relief on ceramic substrates.

Further, the present invention can therefore certainly determine a high advantage from the point of view of its sustainability in both economic and environmental terms.

The above outlined technical problem is solved also by a ceramic manufactured article, preferably in the form of a ceramic panel, having at least one surface having a pattern in relief, obtainable by the process according to the invention.

Substantially, the ceramic manufactured article according to the present invention comprises a ceramic substrate, a printing pattern in relief which is monolithic with the ceramic substrate and obtained from the aforesaid composition curable by ultraviolet radiation for digital relief printing.

In particular, the ceramic manufactured article according to the present invention comprises a ceramic panel having at least one planar surface, wherein said printing pattern in relief is monolithic with such at least one planar surface.

Preferably, such ceramic manufactured article according to the present invention comprises a ceramic panel having at least one planar surface, wherein said printing pattern in relief is monolithic with that at least one planar surface, and an ink layer directly in contact with that printing pattern in relief.

The above outlined technical problem is solved also by a plant comprising a printing system for compositions curable by ultraviolet radiation for digital relief printing.

Such printing line comprises in turn the following units:
- a printing station having at least one printing module, said module comprising at least one printing head designed for the application of a composition curable by ultraviolet radiation for digital relief printing;
- a fixing station comprising fixing means of the composition curable by ultraviolet radiation for digital relief printing, wherein said fixing means consist of an ultraviolet light lamp and are placed at the output of said printing station.
- a firing station adapted to the execution of the aforesaid firing step.

In particular, said printing station is a digital printer.

Preferably, said ultraviolet light lamp is a LED lamp or a mercury (Hg) vapor lamp that can concentrate the power peak at a specific wavelength, comprised according to the project choices between 150 nm and 420 nm.

In particular, given the partially multi-chromatic nature of the emitted ultraviolet radiation, both the possible LED lamp and possible mercury vapor lamp can concentrate a plurality of power peaks at more specific wavelengths.

Specifically, the LED lamp can concentrate a plurality of power peaks at a wavelength comprised between 385 nm and 405 nm; *vice versa,* the mercury vapor lamp can concentrate a plurality of power peaks at a wavelength comprised between 150 nm and 420 nm.

Further characteristics and advantages will become more apparent from the detailed description given below of a preferred but not exclusive embodiment of the present finding, with reference to the accompanying Figures given by way of non-limiting example, as well as comprising, as mentioned, some experimental Examples.

### Brief description of the Drawings

Figure 1 shows a printing system according to the present invention.

### Detailed Description

The composition curable by ultraviolet radiation for digital relief printing according to present invention was used in a process of application to a ceramic substrate and subsequent fixing, firing, and cooling, as above described in relation to the summary of the present invention.

The process according to the invention was carried out due to the aid of a printing system comprised within a suitable plant.

With reference to accompanying Figure 1, 1 globally identifies such printing system.

The printing system 1 is illustrated schematically in the aforesaid Figure, omitting some known constructive elements and graphical simplification of the represented elements.

In the following description, terms such as above, below, lower, upper, or derivatives thereof are to be understood with reference to the standard use configuration of the printing system 1 illustrated in the aforesaid Figures.

In particular, the printing system 1 comprises a printing station 2, which is designed for the realization on the printing area S of at least one decorative pattern in relief 12 on ceramic substrates.

The printing station 2 is arranged to be placed above the ceramic substrate, which is housed above a printing support 7. The printing support 7 is movable and moves in an advancement direction A, transversal to the printing front.

The printing station 2 further comprises at least one printing module 3, cantilevered above the printing area S; possibly, a plurality of printing modules follow each other along the advancement direction A and are substantially placed next to each other.

Each printing module 3 has a lower part developing in the vicinity of the printing area S and housing at least one printing head 4 comprising nozzles 5. Such printing head 4 is naturally facing the printing area S with nozzles 5.

The fixing station 8, placed downstream of such printing station 2 along the advancement direction A, comprises the fixing means 9 of the composition curable by ultraviolet radiation for digital relief printing, adapted to emit U.V. radiations for the curing of the decorative pattern in relief 12 obtained by deposition of the composition curable by ultraviolet radiation for digital relief printing.

Further, the printing system 1 is equipped with advancement means, not represented, to move the printing support 7 according to the advancement direction A.

The speed at which the advancement means are set, during the fixing step, can range between 1 m/min and 60 m/min. Such speed can be set considering the type of the used fixing means 9 and the characteristics of the composition curable by ultraviolet radiation for digital relief printing, as below specified.

The fixing means 9 can be a LED lamp or mercury vapor lamp that can concentrate the power peak at a specific wavelength, comprised according to the project choices between 150 nm and 420 nm.

In particular, given the partially multi-chromatic nature of the emitted ultraviolet radiation, both the possible LED lamp and possible mercury vapor lamp can concentrate a plurality of power peaks at more specific wavelengths.

Specifically, the LED lamp can concentrate a plurality of power peaks at a wavelength comprised between 385 nm and 405 nm; *vice versa,* the mercury vapor lamp can concentrate a plurality of power peaks at a wavelength comprised between 150 nm and 420 nm.

In the plant designed for the execution of the process according to the invention a firing station 11 is present downstream of the printing system 1, adapted to the execution of the aforesaid firing step.

Experimental Examples will now follow wherein compositions curable by ultraviolet radiation for digital relief printing according to the present invention different from each other are used in a process for the application of a layer in relief of such composition according to the invention on ceramic substrates.

### Example 1

Firstly, 9 g of dispersing agent (Solsperse J980 from Lubrizol), 35 g of dipropylene glycol n-butyl ether (DPnB) and 1 g of viscosity depressant additive (Solsperse J955 from Lubrizol) were mixed.

Then, 45 g of inorganic component were added, *i.e.,* a ceramic mix for atomized stoneware, obtaining a dispersion.

Such dispersion was grinded by a ball mill with spheres of yttrium-stabilized zirconium dioxide, the spheres having a diameter of 0.2-1.5 mm, with horizontal axis rotation, until obtaining a dispersion average particle size comprised between 0.5-1.0 microns, measured by a Mastersizer 3000 Malvern laser granulometer.

Once the dispersion is obtained, 10 g of a solution of photoinitiator Omnirad 819 in dipropylene glycol diacrylate are added in a 1:1 ratio.

Finally, such thus grinded dispersion was filtered by a filter with pores of dimensions equal to 5 microns, obtaining a composition curable by ultraviolet radiation for digital relief printing according to the invention.

Such thus obtained composition was chemically-physically characterized. As for the characterization of the stability of the aforesaid composition curable by ultraviolet radiation for digital relief printing, a Mastersizer 3000 Malvern granulometer and a multiple light scattering technology by Turbiscan Lab, Formulaction SA were used with which sedimentation and flocculation were verified by a test of accelerated aging performed at room humidity and at a predeterminate temperature, in particular 20°C, 30°C, 40°C and 50°C.

The test gave positive result.

The thus obtained composition curable by ultraviolet radiation for digital relief printing had a viscosity of 30 cP at a temperature of 30°C.

The viscosity was measured according to the following procedure:
- a sample of the composition curable by ultraviolet radiation for digital relief printing was placed in a Kinexus rheometer equipped with a flat cone impeller;
- the impeller was driven at speed of 20 rpm and kept at such speed steadily for 5 minutes;
- the detected dynamic viscosity value was recorded.

The thus obtained composition curable by ultraviolet radiation for digital relief printing consisted of the following components, shown in percentage by weight based on the total weight of the composition in following Table 1:

**Table 1**

| | | |
|---|---|---|
| Organic component | Dipropylenglycol diacrylate and Omnirad 819 photoinitiator | 10% |
| Inorganic component | Ceramic mix for stoneware | 45% |
| Solvent | Dipropylene glycol n-butyl ether | 35% |
| Dispersing agent | Solsperse J980 | 9% |
| Viscosity depressant agent | Solsperse J955 | 1% |

wherein Omnirad 819 is phenylbis(2,4,6-trimethylbenzoil)phosphinoxide, supplied from IGM Resins.

Then, the composition curable by ultraviolet radiation for digital relief printing was loaded into the printing station. Meanwhile, a ceramic substrate was placed on the printing support. The composition curable by ultraviolet radiation for digital relief printing in the printing head was heated bringing the printing head at the temperature of 30°C, while the ceramic substrate was kept at room temperature. Then, the printing station was operated, deposing the composition curable by ultraviolet radiation for digital relief printing on the ceramic substrate based on the desired decorative pattern in relief, operating the moving means at a speed of 40 m/min.

Within the fixing station, by means of fixing means, in particular of a 16-Watt ultraviolet light LED lamp with double window (40 mm x 200 mm), whose power peak was set at a wavelength of 395 nm and the irradiated power was 500 mJ/cm², the previously applied composition curable by ultraviolet radiation for digital relief printing was partially cured, defining a decorative pattern in relief on the ceramic substrate having a height of 0.6 mm.

At the end of the fixing step, the thus decorated ceramic substrate was led to the firing station, fired according to a firing cycle with temperature ramp to reach a maximum temperature of 1200°C, for a total time of about one hour in order to obtain the finished ceramic manufactured article.

In such firing step, the organic component of the composition according to the invention decomposed due to the temperatures set during such step and due to the partial solidification occurred in the fixing step, wherein the composition curable by ultraviolet radiation for digital relief printing has a consistence not suitable to resist to the temperatures of the firing step.

On the contrary, the inorganic component vitrifies, forming a monolith together with the ceramic substrate, forming reliefs on the ceramic support, delineating the desired decorative pattern. The vitrification of the inorganic component, specifically, occurs due to the components of ceramic type, such as silicates, metal oxides and frit, at the inorganic component being fused to the ceramic substrate, thus delineating the tridimensional effect of the decoration on the surface of the ceramic substrate.

Finally, the thus decorated ceramic substrate was cooled in order to reach room temperature and obtain the thus decorated and structured ceramic manufactured article.

### Example 2

In this Example, the composition curable by ultraviolet radiation for digital relief printing was obtained performing a procedure comprising all the steps set in the previous Example, but in compliance with the following technical specifications, *i.e.,* substituting the solvent glycol ether with water.

First, 8 g of dispersing agent (Disperbyk 2018 from Byk Additives & instruments), 30 g of H₂O and 0.5 g of anti-foam additive (BYK-1640 (Byk Additives 8v instruments) were mixed.

Then 45 g of inorganic component were added, *i.e.,* a ceramic mix for atomized stoneware obtaining a dispersion.

Such dispersion was grinded by a ball mill with spheres of yttrium-stabilized zirconium dioxide, the spheres having a diameter of 0.2-1.5 mm, with horizontal axis rotation, until obtaining a dispersion average particle size comprised between 0.5-1.0 microns, measured by a Mastersizer 3000 Malvern laser granulometer.

Once the dispersion is obtained, 10 g of a 1:1 solution of photoinitiator Omnirad 819W and UCECOAT-2801 WB are added. Upon stabilization of the mixture, 6.3 g of glycerol and 0.2 g of the antibacterial agent Bacillat are added.

Finally, such thus grinded dispersion was filtered by a filter with pores of dimensions equal to 5 microns, obtaining a composition curable by ultraviolet radiation for digital relief printing according to the invention.

The used composition curable by ultraviolet radiation for digital relief printing is consisting of the following components, shown in percentage by weight based on the total weight of the composition:

**Table 2**

| | | |
|---|---|---|
| Organic component | Omnirad 819W photoinitiator and UCECOAT-2801 WB | 10 |
| Inorganic component | Ceramic mix for stoneware | 45 |
| Solvent 1 | H₂O | 30 |
| Solvent 2 | Glycerol | 6.3 |
| Dispersing agent | DISPERBYK 2018 | 8 |
| Functional additives | Antifoam: BYK-1640 (Byk Additives 8v instruments) | 0.5 |
| | Antibacterial agent: Bacillat (Troy corporation) | 0.2 |

wherein Omnirad 819 is phenylbis(2,4,6-trimethylbenzoil)phosphinoxide, supplied from IGM Resins, wherein UCECOAT-2801WB is a polyurethane acrylate dispersion from ALLNEX.

Unless otherwise indicated, all the other technical specifications coincided with those of in Example 1.

Therefore, it was advantageously proven that such composition curable by ultraviolet radiation for digital relief printing of the invention, in its embodiments, and its application method allows to obtain ceramic manufactured articles structured in a different manner from each other, *i.e.,* having a decoration in relief reproducing tactile and visual characteristics similar to marble, wood, or stone cavities. Further, the composition curable by ultraviolet radiation for digital relief printing according to the invention has components sustainable for the environment. Moreover, the steps of the application method of such composition curable by ultraviolet radiation for digital relief printing are cheaper than using traditional decoration means.

Further, the overall steps of the decorative method are reduced, so to optimize the production times of the ceramic manufactured articles. Moreover, the decoration of the invention can be used by different decoration technologies, which can be used in combination in the contest of the process of the invention involving the production of ceramic substrates having different types of decorative pattern, customized according to market demands.

## Claims

1. A composition curable by ultraviolet radiation for digital relief printing comprising:
- an inorganic component comprising at least one element selected from clay, a silica mineral, a silicate, a frit, or any mixture thereof;
- an organic component comprising at least one photoinitiator and at least one selected from acrylate monomer, acrylate polymer, methacrylate monomer or methacrylate polymer or any combination thereof;
- a solvent; and
- a dispersing agent.

2. Composition curable by ultraviolet radiation for digital relief printing according to claim 1, wherein the solvent is selected from water, glycerol or at least one alkyl ether or any combination thereof.

3. Composition curable by ultraviolet radiation for digital relief printing according to claim 1 or 2, wherein the silica mineral is selected from quartz, a quartz polymorph mineral, opal, or any combination thereof, and/or the silicates are selected from feldspars, kaolin, phyllosilicates, in particular talc, borosilicates or any combination thereof.

4. Composition curable by ultraviolet radiation for digital relief printing according to any one of the preceding claims, wherein such frit comprises an element selected from silica and/or a solvate thereof, a silica mineral, a silicate, a metal oxide, a metal oxide-based mineral, a non-metal oxide, a metal silicide, or any combination thereof.

5. Composition curable by ultraviolet radiation for digital relief printing according to any one of the preceding claims, wherein said acrylate monomer, said acrylate polymer, said methacrylate monomer or said methacrylate polymer can be selected from an alkyl acrylate, an alkyl methacrylate, a diol diacrylate, a diol dimethacrylate, a polyol diacrylate, a polyol dimethacrylate, a polyol triacrylate, a polyol trimethacrylate, a polyurethan acrylate, a glycolic monomer acrylate or any combination thereof.

6. Composition curable by ultraviolet radiation for digital relief printing according to any one of the preceding claims, wherein the inorganic component is present in an amount comprised between 25%-70%, preferably between 30-60%, by weight on the total weight of the composition curable by ultraviolet radiation for digital relief printing and/or wherein the organic component is comprised between 0.1-15%, preferably between 1-10%, by weight on the total weight of the composition curable by ultraviolet radiation for digital relief printing.

7. Composition curable by ultraviolet radiation for digital relief printing according to any one of the preceding claims, wherein said dispersing agent is a polymer or copolymer with functional groups with affinity to inorganic components, preferably said functional groups being carboxy groups, amine groups, sulphonic groups, phosphonate groups or being an ammonium salt and/or said dispersing agent being comprised between 1-20% by weight on the total weight of composition curable by ultraviolet radiation for digital relief printing.

8. A process for the application of a composition curable by ultraviolet radiation for digital relief printing on ceramic substrates comprising the steps of:
a) providing a ceramic substrate;
b) providing the composition curable by ultraviolet radiation for digital relief printing according to any one of the preceding claims 1-8, comprising an inorganic component comprising at least one element selected from clay, a silica mineral, a silicate, a frit, or any mixture thereof; an organic component comprising at least one photoinitiator and at least one selected from acrylate monomer, acrylate polymer, methacrylate monomer, methacrylate polymer or any combination thereof; a solvent; and a dispersing agent;
c) applying the aforesaid composition curable by ultraviolet radiation for digital relief printing on the ceramic substrate by digital printing;
d) fixing said composition curable by ultraviolet radiation for digital relief printing on the aforesaid ceramic substrate by curing with ultraviolet radiation, obtaining a ceramic substrate having a decorative pattern in relief;
e) firing the thus decorated ceramic substrate at a temperature comprised between 900°C-1200°C until obtaining a fired ceramic substrate having a decorative pattern in relief, wherein said decorative pattern in relief is monolithic with the fired ceramic substrate;
f) cooling or allowing to cool said fired ceramic substrate having a decorative pattern in relief.

9. Process for the application of a composition curable by ultraviolet radiation for digital relief printing according to claim 8, wherein in the composition curable by ultraviolet radiation for digital relief printing provided during step b) the average particle size is lower than 5 microns, preferably being comprised between 0.1 and 4 microns, more preferably between 0.1 and 3 microns, measured by a Mastersizer 3000 Malvern laser granulometer.

10. Process for the application of a composition curable by ultraviolet radiation for digital relief printing according to claim 8 or 9, wherein step b) of providing a composition curable by ultraviolet radiation for digital relief printing comprises the following steps:
- mixing the inorganic component by stirring with the dispersing agent and the solvent, obtaining a dispersion;
- grinding such dispersion until obtaining an average particle size lower than 5 microns, preferably between 0,1 and 4 microns, more preferably between 0.1 and 3 microns, measured by a Mastersizer 3000 Malvern laser granulometer;
- mixing said thus grinded dispersion with the organic component;
- optionally, filtering the previously obtained dispersion by a filter with pores of size equal to or lower than 5 microns obtaining a composition curable by ultraviolet radiation for digital relief printing.

11. Process for the application of a composition curable by ultraviolet radiation for digital relief printing according to any one of claims 8 to 10, wherein during step c) of application the composition curable by ultraviolet radiation for digital relief printing has a viscosity comprised between 5cP- 50cP, measured at a temperature comprised between 20 °C and 60 °C.

12. Process for the application of a composition curable by ultraviolet radiation for digital relief printing according to any one of claims 8 to 11, wherein during step d) of fixing a ceramic substrate having an at least partially cross-linked decorative pattern in relief is obtained.

13. A ceramic manufactured article, preferably in the form of a ceramic panel, having at least one surface having a pattern in relief, obtainable by the process according to any one of the preceding claims from 8 to 12.
